# FASCICULE DE BREVET EUROPEEN

(11) **EP 3 462 896 B1**
(45) Date de publication et mention de la délivrance du brevet: **12.11.2025**
(21) Numéro de dépôt: 17726247.4
(22) Date de dépôt: 23.05.2017
(51) Int. Cl.: A23C 13/14, A23C 13/16, A23B 11/30

(54) **COMPOSITION DE CREME ALIMENTAIRE ACIDE, FERMENTEE ET STERILISEE ET SON PROCEDE DE PREPARATION**
SAURE, FERMENTIERTE UND STERILISIERTE LEBENSMITTELCREME UND IHR HERSTELLUNGSVERFAHREN
ACIDIC, FERMENTED AND STERILISED FOOD CREAM COMPOSITION AND ITS PROCESS OF MANUFACTURE

(30) Priorité: 26.05.2016 FR 1654729
(43) Date de publication de la demande: 10.04.2019
(73) Titulaire: Groupe Lactalis, 53000 Laval (FR)
(72) Inventeur: JEMIN, Marlène, 53000 LAVAL (FR); SENEZ, Sandra, 53000 LAVAL (FR); COTTINEAU, Christian, 53000 LAVAL (FR); JARDIN, Edwige, 53000 LAVAL (FR); FEREY, Catherine, 53000 LAVAL (FR)
(74) Mandataire: Cabinet Le Guen Maillet
(86) Numéro de dépôt international: PCT/EP2017/062340
(87) Numéro de publication internationale: WO 2017/202810

(56) Documents cités:
- EP-A2- 2 269 466
- WO-A1-2012/085011
- FR-A1- 2 839 246
- JP-A- S62 215 340
- US-A- 3 507 663
- US-A1- 2015 173 387
- DATABASE GNPD [online] MINTEL; November 2015 (2015-11-01), DORNA LACTATE: "Cooking Sour Cream", XP002766314, Database accession no. 3568357
- ADAPA S ET AL: "Physical properties of low-fat sour cream containing exopolysaccharide-producing lactic acid", JOURNAL OF FOOD SCIENCE, WILEY-BLACKWELL PUBLISHING, INC, US, vol. 63, no. 5, 1998, pages 901 - 903, XP002229236, ISSN: 0022-1147, DOI: 10.1111/J.1365-2621.1998.TB17922.X
- DATABASE WPI Week 201601, Derwent World Patents Index; AN 2015-82354R, XP002766315

## Description

La présente invention se situe dans le domaine technique de l'alimentaire et concerne une composition de crème alimentaire acide, fermentée et stérilisée ainsi que son procédé de préparation.

Les crèmes alimentaires les plus connues et les plus couramment utilisées par les consommateurs sont élaborées à partir de crème d'origine laitière et regroupent, pour l'essentiel, les crèmes U.H.T. et les crèmes acides et fermentées.

Les crèmes acides et fermentées, traditionnellement nommées « crèmes fraîches » notamment en France, sont préparées à partir de crèmes qui sont pasteurisées puis ensemencées par des ferments lactiques pour subir un processus de maturation. Au cours de ce processus de maturation, et sous l'action des ferments lactiques, la viscosité est augmentée, le pH diminue et le profil aromatique initial est modifié par l'apport de composés aromatiques issus de la fermentation, conférant ainsi à la crème un goût généralement qualifié d' « acidulé et frais », reconnaissable et particulièrement attractif. Ces crèmes sont dites épaisses car elles présentent des viscosités comprises entre 3000 et 5000 mPa.s (mesurées à 4°C, avec un cisaillement de 100 s⁻¹). Leur durée de conservation est d'environ trente à cinquante jours, à 4°C. Ces crèmes ne sont pas adaptées à une conservation à température ambiante. Une telle crème est connue de par exemple FR 2 839 246 A1 divulguant une composition de crème alimentaire comprenant des ferments thermophiles, en tant qu'épaississants de la pectine, amidon modifié, caroube, gélatine et gomme guar, avec une viscosité à partir de 3000 cP.

En outre, Adapa S et al: "Physical properties of low-fat sour cream containing exopolysaccharide-producing lactic acid", JOURNAL OF FOOD SCIENCE, WILEY-BLACKWELL PUBLISHING, INC, US, vol. 63, no. 5, 1998, pages 901-903 divulgue la préparation de crème fermentée acidulée réduite en graisse et liquide comprenant les ferments Lactococcus lactis subsp. lactis et Lactococcus lactis subsp. lactis biovar diacetylactis ainsi qu'en tant qu'épaississants un mélange d'amidon, gélatine, gomme guar et carraghène et des mono- et diglycerides.

Les crèmes U.H.T. sont, quant à elles, des crèmes non fermentées, qui ont été stérilisées à ultra-hautes températures. Leur conservation est d'au minimum cent vingt jours, à 4°C ou encore à une température ambiante de 20°C en moyenne. Elles présentent des textures dites fluides à semi-épaisses avec une viscosité comprise entre 50 et 1200 mPa.s mesurée à 4°C. Grâce à de telles viscosités ces crèmes sont aptes à couler ce qui permet un conditionnement en briques ou en bouteilles, des contenants plus faciles à utiliser ou à stocker et, en outre, aujourd'hui recyclables et respectueux de l'environnement. Parmi les autres caractéristiques de ces crèmes, on note une bonne tenue à la cuisson ce qui les rend intéressantes pour la préparation de certains plats culinaires. En ce qui concerne leur caractéristique de goût, il est généralement qualifié de « neutre », ces crèmes ne présentant pas les composés aromatiques d'une crème acide et fermentée.

Il n'existe pas, aujourd'hui sur le marché, de crèmes regroupant les avantages d'une crème U.H.T. et d'une crème fraîche acide et fermentée, notamment de crèmes fermentées à texture fluide à semi épaisse, présentant le goût « acidulé et frais » particulier et attractif de la crème fermentée et les caractéristiques de viscosités et de conservation, en particulier à température ambiante, de la crème U.H.T..

L'une des difficultés rencontrées lors du développement d'une telle crème est le phénomène de floculation des globules gras contenus dans la matière grasse qui se produit en grande partie du fait de l'acidification engendrée par la fermentation et qui est responsable de l'augmentation de la viscosité. La viscosité étant un facteur limitant pour le passage d'un produit sur des lignes de stérilisation, cette augmentation de viscosité rend impossible la stérilisation de la crème et, par là même, l'obtention d'une crème longue conservation. Par ailleurs, cette augmentation de viscosité ne permet pas non plus l'obtention d'une crème à viscosité fluide à semi épaisse.

C'est dans ce contexte, et dans le but de proposer une telle crème avantageuse, que la société déposante a mené des recherches et s'est en particulier attachée à trouver des solutions afin de maîtriser le phénomène de floculation.

Le phénomène de floculation est un phénomène qui se produit lorsque des globules gras présents dans une crème se rassemblent pour former un agrégat au sein duquel chaque globule conserve son interface membranaire. Il s'agit d'un phénomène réversible contrôlé par la fréquence de collision entre globules gras qui dépend principalement de leur concentration et de leur mobilité. Il est, en outre, favorisé par les molécules susceptibles de réaliser des pontages entre globules gras (Fondements physicochimiques de la technologie laitière - Croguennec/Jeantet/Brulé - 2008).

Lors du procédé de fabrication d'une crème fraîche acide et fermentée, la crème qui est issue de l'écrémage du lait et qui présente un pH de l'ordre de 6,7 à 6,8, subit un traitement thermique de pasteurisation. Certaines protéines laitières présentes dans la crème sont dénaturées lors de ce traitement thermique. Ces protéines présentent un pH isolélectrique (pHi) moyen de 4,6. Lorsque le pH est supérieur à ce pHi, une force de répulsion électrostatique s'exerce ainsi entre elles et limite donc leur rapprochement. Lors de l'homogénéisation de la crème, la réduction du diamètre moyen des globules gras, augmente considérablement la surface de l'interface de l'émulsion huile dans eau. Les protéines de lait, au pouvoir émulsifiant important, viennent recréer une interface protéique à la surface des globules gras récemment reformés. Lors de la fermentation qui suit l'homogénéisation, la synthèse d'acide lactique par les bactéries lactiques provoque une lente diminution du pH jusqu'à atteindre le pH isoélectrique des protéines. Celles-ci ne sont alors plus chargées électriquement et leur agrégation par pontage est rendue possible. Des interactions entre leurs différentes zones hydrophobes sont également rendues possibles. Ces interactions et l'agrégation par pontages provoquent la floculation des globules gras et une importante augmentation de la viscosité. Par ailleurs, les étapes de montée en température, par exemple lors de la cuisson chez le consommateur, sont des facteurs de risque d'agrégation protéique et de floculation. En effet, certaines protéines de lait contenues dans la crème présentent une sensibilité accrue au chauffage associé au cisaillement lorsque le milieu est acide. Leur précipitation doit donc être maîtrisée pour éviter la floculation par pontage et, de plus, la formation de grains protéiques, c'est à dire le rapprochement de protéines en solution dans la phase continue.

Un des buts de la présente invention est ainsi de proposer une nouvelle composition de crème alimentaire qui regroupe à la fois les avantages d'une crème U.H.T. et d'une crème acide et fermentée, mais qui ne présente pas les phénomènes susmentionnés, ni lors de la fabrication, pour permettre le passage de la crème sur ligne de stérilisation, ni lors de la conservation chez le distributeur et le consommateur pour garantir une texture fluide à semi-épaisse et une bonne tenue à la cuisson.

En particulier, un but de la présente invention est de proposer une composition de crème alimentaire acide, fermentée et stérilisée, qui présente des propriétés de conservation, à 4°C ou à température ambiante, de 20°C en moyenne, au moins équivalentes à celles d'une crème U.H.T. non fermentée, c'est à dire d'au minimum une centaine de jours, de manière notamment à rendre la crème exportable, en particulier sur des zones ou la chaîne de froid est difficilement maintenue, voire inexistante, ou à faciliter la conservation chez le consommateur.

Un autre but de la présente invention est de proposer une telle composition de crème alimentaire fermentée et stérilisée qui présente des caractéristiques de goût équivalentes à celles des crèmes fraîches acides et fermentées, en particulier la note acide caractéristique de ces crèmes, ainsi qu'une bonne tenue à la cuisson.

Encore un autre but de la présente invention est de proposer une composition de crème alimentaire fermentée et stérilisée qui présente une texture fluide à semi-épaisse équivalente à celle d'une crème non fermentée U.H.T, c'est à dire une crème présentant une viscosité comprise entre 50 et 2000 mPa.s, préférentiellement entre 800 et 1200 mPa.s, ainsi apte à couler de manière à permettre notamment un conditionnement en briques et en bouteilles.

Enfin, un autre but de la présente invention est de proposer une telle composition de crème alimentaire fermentée et stérilisée qui soit fabriquée selon un procédé simple.

A cet effet, l'invention concerne une composition de crème alimentaire acide, fermentée et stérilisée, telle que définie dans les revendications.

La composition de crème alimentaire selon l'invention présente des caractéristiques de goût équivalentes à celles des crèmes fraîches acides et fermentées, ainsi qu'une bonne tenue à la cuisson. Elle présente également une texture fluide à semi-épaisse, équivalente à celle d'une crème non fermentée U.H.T, avec une viscosité comprise entre 800 et 1200 mPa.s. Par ailleurs, les viscosités de la composition selon l'invention, mesurées à 4°C et à 20°C, ne présentant pas d'écart supérieur à 400 mPa.s, celle-ci présente bien l'avantage de pouvoir être conservée à froid ou à température ambiante. En outre, la conservation est possible jusqu'à une centaine de jours, au minimum, car la composition selon l'invention a subi des traitements de stérilisation à hautes températures.

Les émulsifiants sélectionnés dans le cadre de l'invention permettent de limiter de manière significative les phénomènes décrits précédemment d'agrégation de globules entre eux, de floculation et ainsi d'augmentation de la viscosité. La viscosité est alors adaptée à la mise en œuvre de procédés de stérilisation et à l'obtention d'une crème fluide à semi-épaisse stable. Sans être lié par une quelconque théorie, il est énoncé que les émulsifiants soigneusement sélectionnés se substituent et désorbent une partie des protéines qui sont adsorbées à la surface des globules gras dans la composition.

Dans le cadre de la présente invention, les viscosités mentionnées sont mesurées sur un appareil viscosimètre à cisaillement Tve-05 de la société LAMY, en utilisant une géométrie BV10, avec un cisaillement 100 ^{s-1}.

Les mono-et diglycérides d'acides gras sont choisis parmi les produits fabriqués à partir de matières grasses végétales ou animales. Ils sont connus sous le nom de E471 du code européen des additifs alimentaires. Préférentiellement, ils contiennent plus de 90% de monoglycérides et environ 10% de diglycérides.

Les esters mono- et diacétyltartriques de mono- et diglycérides d'acides gras sont connus sous le nom de E472e du code européen des additifs alimentaires.

La composition comprend entre 0,2 et 1%, plus préférentiellement entre 0,2 et 0,4%, en poids, par rapport au poids total de la composition, de la combinaison de mono- et diglycéride d'acides gras et d'esters mono- et diacétyltartriques de mono- et diglycérides d'acides gras.

Il convient de noter que la composition peut tout à fait ne pas inclure d'autres émulsifiants.

Avantageusement encore, le ratio entre (a) les mono- et diglycéride d'acides gras et (b) les esters mono- et diacétyltartriques de mono- et diglycérides est compris entre 1 et 2.

La composition comprend à titre de ferments, les ferments mésophiles *Lactococcus lactis subsp. Lactis et Lactococcus lactis subsp. lactis biovar diacetylactis*

La sélection de ces ferments mésophiles, en particulier la combinaison des deux ferments sélectionnés, contribue également à limiter le phénomène de floculation, notamment dans des crèmes dont le taux de matière grasse est de plus de 20 %. En effet, la sélection de ces bactéries lactiques mésophiles peu acidifiantes permet de maîtriser et de limiter la diminution de pH de la crème et ainsi le phénomène de floculation. En effet, le pH de fin de maturation des bactéries lactiques sélectionnées étant supérieur au pHi des protéines laitières dénaturées présentes dans la composition, l'agrégation par pontage de ces dernières n'est pas rendu possible.

Selon un autre mode de réalisation préféré de l'invention, la composition comprend, à titre de ferments supplémentaires, le ferment mésophile *Leuconostoc mesenteroides subsp. Cremoris* ou *Lactococcus lactis subsp. crémoris.*

Le ferment *Leuconostoc mesenteroides subsp. Cremoris* contribue à l'obtention du profil aromatique de la composition de crème. Le ferment *Lactococcus lactis subsp. Crémoris,* quant à lui, convient pour des crèmes présentant un taux de matière grasse inférieur à 20%.

La composition comprend entre 5 et 100 g/100 L de ferments.

Pour atteindre les propriétés organoleptiques souhaitées, et compenser le faible pouvoir acidifiant des ferments, l'acidité de la crème peut être renforcée par voie chimique pour atteindre le pH envisagé.

Ainsi, avantageusement, la composition comprend de l'acide citrique et de l'acide lactique. Chacun de ces acides est ajouté à une teneur s'étendant jusqu'à 0,8%, en poids, par rapport au poids total de la composition.

La composition présente un pH compris entre 4,6 et 5, préférentiellement entre 4,7 et 4,8.

La composition comprend à titre d'épaississants entre 0,1 et 0,5% de pectine hautement méthylée entre 0,1 et 2 % d'amidon modifié, entre 0,1 et 0,5 % de pectine faiblement méthylée, entre 0,1 et 0,5 % cellulose et de gomme de cellulose, en poids, par rapport au poids total de la composition.

La composition comprend entre 5 et 40 % de matière grasse, préférentiellement entre 12 et 30 %, plus préférentiellement entre 15 et 25 %, en poids par rapport au poids total de la composition.

L'ajustement du taux de matière grasse est réalisé à l'aide du lait écrémé et de la crème d'origine laitière, c'est à dire la crème issue de l'écrémage d'un lait, par exemple d'un lait de vache ou de tout autre animal producteur de lait, selon des méthodes bien connues de l'homme du métier. A titre d'exemple, une composition comprenant entre 15 et 25% de matière grasse pourra contenir entre 50 et 70 %, en poids par rapport au poids total de la composition, de crème d'origine laitière.

L'invention concerne encore un procédé de fabrication d'une composition de crème alimentaire acide, fermentée et stérilisée, telle que décrite précédemment, comprenant, dans l'ordre, les étapes de :
- préparation d'un lait écrémé,
- ajout des stabilisants et émulsifiants,
- préparation d'une crème d'origine laitière,
- mélange du lait écrémé et de la crème d'origine laitière,
- éventuellement ajout d'au moins un acide,
- homogénéisation et pasteurisation du mélange de lait écrémé et de crème d'origine laitière, puis refroidissement,
- ajout des ferments et fermentation,
- éventuellement ajout d'au moins un acide,
- stérilisation,
- homogénéisation,
- refroidissement et conditionnement stérile.

Les composants ajoutés au cours du procédé, tels que les émulsifiants, les ferments, les acides, sont tels que ceux décrits dans la partie de la présente demande en lien avec la composition.

L'étape de pasteurisation du mélange de lait écrémé et de crème d'origine laitière se déroule à une température supérieure ou égale à 90°C. Le mélange est ensuite refroidi à 20°C.

L'étape ultérieure de fermentation se déroule entre 17 et 21°C durant 14 à 20h. Lors de la fermentation, la diminution de pH est maîtrisée grâce à la sélection de ferments spécifiques. La présence des deux émulsifiants selon l'invention va limiter le phénomène de floculation. Par ailleurs, l'ajout d'acide en fin de fermentation, sous agitation forte, entraîne une réduction rapide de pH jusqu'à un pH cible, par exemple de 4,7. On suppose que cette réduction rapide limite fortement l'agrégation, laquelle était déjà en grande partie réduite par les émulsifiants.

L'étape ultérieure de stérilisation se déroule à une température comprise entre 125 et 135 °C durant moins d'une minute. L'étape de stérilisation n'entraîne pas de phénomènes de floculation pour les raisons expliquées précédemment.

L'étape de conditionnement en pots, bouteilles, briques, ou tout autre contenant, en vue de la distribution aux consommateurs, se déroule en conditions stériles.

### Exemple : préparation d'une crème alimentaire fermentée et stérilisée selon des modes des réalisations préférés de l'invention (Tableau 1 :

**Tableau 1**

| **Ingrédients** | **g/100g** |
|---|---|
| Taux de Matière Grasse (MG) | 5-40, préférentiellement 15 -25 |
| Lait écrémé | QSP |
| Crème d'origine laitière | QSP |
| Emulsifiants (E471 et E472) | 0,2-1 |
| Amidon modifié | 0,1-2 |
| Pectine LM | 0,1-0,5 |
| Pectine HM | 0,1-0,8 |
| Cellulose, gomme de cellulose | 0,1-0,5 |
| Acide citrique | 0-0,8 |
| Acide lactique | 0-0,8 |
| **Ferments** | **g/100L** |
| Ferments lactiques | 5-100 |
| pH | 4,6-5 |
| | pref. 4,7-4,8 |

Les ferments sélectionnés *sont : Lactococcus lactis subsp. lactis* et *Lactococcus lactis subsp. lactis biovar diacetylactis.*

Les compositions formulées selon cet exemple présentent les caractéristiques recherchées dans le cadre de la présente invention, en particulier elles présentent un goût acidulé à acide, une viscosité semi-épaisse **de 800 à 1200 mPas.s,** ainsi qu'une capacité de conservation à froid ou à température ambiante d'au moins 120 jours.

### Exemple 2 : Validation de crèmes alimentaires fermentées et stérilisées selon des modes des réalisations préférés de l'invention :

Des compositions de crèmes ont été élaborées (Tableau 2) et les viscosités mesurées à 4°C et à 20°C, sur un appareil viscosimètre à cisaillement Tve-05 de la société LAMY, en utilisant une géométrie BV10, avec un cisaillement 100 s⁻¹. Le profil aromatique et la viscosité ont été évalués.

Les résultats sont indiqués dans le Tableau 3.

**Tableau 2 :**

| **Composition** | **TEMOIN** | **Essai A** | **Essai B** | **Essai C** |
|---|---|---|---|---|
| **Taux de MG** | 25% | 25% | 25% | 25% |
| **Crème, lait écrémé, amidon modifié, pectine LM, pectine HM, cellulose, gomme de cellulose, acide citrique, acide lactique** | ✔ | ✔ | ✔ | ✔ |
| **Emulsifiant** | | | | |
| **E472e** | ✔ | ✔ | ✔ | - |
| **E471** | ✔ | ✔ | - | ✔ |
| **Ferments** | *- Lactococcus lactis subsp. lactis,* | *-Lactococcus lactis subsp. lactis,* | Même ferments que témoin | Même ferments que témoin |
| | *-Lactococcus lactis subsp. lactis biovar diacetylactis,* | | | |
| | | *-Lactococcus lactis subsp. lactis biovar diacetylactis,* | | |
| | *-Leuconostoc mesenteroides subsp. cremoris* | | | |

**Tableau 3**

| **Résultats** | **TEMOIN** | **Essai A** | **Essai B** | **Essai C** |
|---|---|---|---|---|
| Passage sur installation de stérilisation industrielle [conformité] | OUI | OUI | OUI | OUI |
| Viscosité du produit fini à 4°C | 1000 | 900 | 900 | 300 |
| Viscosité du produit fini à 20°C | 800 | 700 | >2000 | 150 |
| Conformité à la viscosité recherchée | OUI | OUI | **NON** | OUI |
| Profil aromatique « acidulé et frais » | OUI | OUI | OUI | **NON** |

On note que lorsque les compositions ne comprennent pas les émulsifiants selon l'invention, c'est à dire des mono et diglycérides d'acides gras ainsi que des esters mono- et diacétyltartriques de mono- et diglycérides, la viscosité mesurée à 20°C n'est pas celle d'une crème fluide à semi-épaisse (Essai B), ou encore que le goût ne correspond pas à celui recherché (Essai C).

## Revendications

1. Composition de crème alimentaire acide, fermentée et stérilisée, comprenant entre 5 et 40 % de matière grasse, **caractérisée en ce qu'**elle présente une viscosité mesurée à 4°C, avec un viscosimètre à cisaillement, avec un cisaillement de 100 ^{s-1}, comprise entre 800 et 1200 mPa.s, un pH entre 4,6 et 5, et **en ce qu'**elle comprend :
- une crème d'origine laitière,
- un lait écrémé,
- entre 5 et 100 g/100 L de ferments comprenant *Lactococcus lactis subsp. Lactis* et *Lactococcus lactis subsp. lactis biovar diacetylactis,*
- à titre d'émulsifiants, entre 0,2 et 1% d'une combinaison de (a) mono- et diglycérides d'acides gras et de (b) esters mono- et diacétyltartriques des mono- et diglycérides d'acides gras, en poids, par rapport au poids total de la composition,
- des épaississants incluant entre 0,1 et 0,5% de pectine hautement méthylée entre 0,1 et 2 % d'amidon modifié, entre 0,1 et 0,5 % de pectine faiblement méthylée, entre 0,1 et 0,5 % de cellulose et de gomme de cellulose, en poids, par rapport au poids total de la composition,
- de l'acide citrique et de l'acide lactique, chacun à une teneur jusqu'à 0,8% en poids, par rapport au poids total de la composition.

2. Composition selon la revendication 1, **caractérisée en ce que** la composition comprend préférentiellement entre 0,2 et 0,4%, en poids, par rapport au poids total de la composition, de la combinaison de mono- et diglycéride d'acides gras et d'esters mono- et diacétyltartriques de mono- et diglycérides d'acides gras.

3. Composition selon l'une des revendications précédentes, **caractérisée en ce que** le ratio entre (a) les mono- et diglycérides d'acides gras et (b) les esters mono- et diacétyltartriques de mono- et diglycérides est compris entre 1 et 2.

4. Composition selon l'une des revendications précédentes, **caractérisée en ce que** la composition comprend, à titre de ferments supplémentaires, le ferment mésophile *Leuconostoc mesenteroides subsp. Cremoris* ou *Lactococcus lactis subsp. crémoris.*

5. Composition selon l'une des revendications précédentes, **caractérisée en ce qu'**elle présente un pH compris entre 4,7 et 4,8.

6. Composition selon l'une des revendications précédentes, **caractérisée en ce que** la composition comprend entre 12 et 30 % de matière grasse, plus préférentiellement entre 15 et 25 %, en poids par rapport au poids total de la composition.

7. Procédé de fabrication d'une composition de crème alimentaire acide, fermentée et stérilisée, selon l'une des revendications précédentes, comprenant, dans l'ordre, les étapes de :
- préparation d'un lait écrémé pasteurisé,
- ajout des stabilisants et émulsifiants,
- préparation d'une crème d'origine laitière pasteurisée,
- mélange du lait écrémé et de la crème d'origine laitière,
- éventuellement ajout d'au moins un acide,
- homogénéisation et pasteurisation du mélange puis refroidissement,
- ajout des ferments et fermentation,
- éventuellement ajout d'au moins un acide,
- stérilisation,
- homogénéisation,
- refroidissement,
- conditionnement stérile.

## Patentansprüche

1. Saure, fermentierte und sterilisierte Speisesahnezusammensetzung, die zwischen 5 und 40 % Fett umfasst, **dadurch gekennzeichnet, dass** sie eine bei 4 °C mit einem Scherviskosimeter bei einer Schergeschwindigkeit von 100^{s-1} gemessene Viskosität zwischen 800 und 1200 mPa.s einen pH-Wert zwischen 4,6 und 5 aufweist und dass sie Folgendes umfasst:
- eine Milchproduktsahne,
- eine Magermilch,
- zwischen 5 und 100 g/100 1 Fermente, die *Lactococcus lactis subsp. Lactis* und *Lactococcus lactis subsp. lactis biovar diacetylactis* umfassen,
- als Emulgatoren zwischen 0,2 und 1 Gew.-% einer Kombination aus (a) Fettsäuren-Mono- und Diglyceriden und (b) Mono- und Diacetylweinsäureestern der Fettsäuren-Mono- und Diglyceride, bezogen auf das Gesamtgewicht der Zusammensetzung,
- Verdickungsmittel, die zwischen 0,1 und 0,5 Gew.-% hoch methyliertes Pektin, zwischen 0,1 und 2 Gew.-% modifizierte Stärke, zwischen 0,1 und 0,5 Gew.-% niedrig methyliertes Pektin, zwischen 0,1 und 0,5 Gew.-% Cellulose und Cellulosegummi, bezogen auf das Gesamtgewicht der Zusammensetzung, einschließen,
- Zitronensäure und Milchsäure, jeweils mit einem Gehalt von bis zu 0,8 Gew.-%, bezogen auf das Gesamtgewicht der Zusammensetzung.

2. Zusammensetzung nach Anspruch 1, **dadurch gekennzeichnet, dass** die Zusammensetzung bevorzugt zwischen 0,2 und 0,4 Gew.-%, bezogen auf das Gesamtgewicht der Zusammensetzung, der Kombination aus Fettsäuren-Mono- und Diglyceriden und Mono- und Diacetylweinsäureestern von Fettsäuren-Mono- und Diglyceriden umfasst.

3. Zusammensetzung nach einem der vorstehenden Ansprüche, **dadurch gekennzeichnet, dass** das Verhältnis zwischen (a) den Fettsäuren-Mono- und Diglyceriden und (b) den Mono- und Diacetylweinsäureestern von Mono- und Diglyceriden zwischen 1 und 2 liegt.

4. Zusammensetzung nach einem der vorstehenden Ansprüche, **dadurch gekennzeichnet, dass** die Zusammensetzung als zusätzliche Fermente das mesophile Ferment *Leuconostoc mesenteroides subsp. Cremoris* oder *Lactococcus lactis subsp. cremoris* umfasst.

5. Zusammensetzung nach einem der vorstehenden Ansprüche, **dadurch gekennzeichnet, dass** sie einen pH zwischen 4,7 und 4,8 aufweist.

6. Zusammensetzung nach einem der vorstehenden Ansprüche, **dadurch gekennzeichnet, dass** die Zusammensetzung zwischen 12 und 30 Gew.-%, bevorzugt zwischen 15 und 25 Gew.-%, bezogen auf das Gesamtgewicht der Zusammensetzung, Fett umfasst.

7. Herstellungsverfahren einer fermentierten und sterilisierten sauren Speisesahnezusammensetzung nach einem der vorstehenden Ansprüche, das nacheinander die folgenden Schritte umfasst:
- Zubereitung einer pasteurisierten Magermilch,
- Zugabe von Stabilisatoren und Emulgatoren,
- Zubereitung einer pasteurisierten Milchproduktsahne,
- Mischen der Magermilch und der Milchproduktsahne,
- eventuell Zugabe mindestens einer Säure,
- Homogenisierung und Pasteurisierung der Mischung gefolgt von Abkühlung,
- Zugabe der Fermente und Gärung,
- eventuell Zugabe mindestens einer Säure,
- Sterilisation,
- Homogenisierung,
- Abkühlung,
- sterile Verpackung.

## Claims

1. Acidic, fermented and sterilised food cream composition, comprising between 5 and 40% of fats, **characterised in that** it shows a viscosity, as measured at 4°C with a shear viscosimeter at a 100 ^{s-1} shear value, between 800 and 1200 mPa.s, a pH value between 4.6 and 5, and **in that** it comprises:
- dairy cream,
- skim milk,
- between 5 and 100 g/100 L ferments, including *Lactococcus lactis subsp. Lactis* and *Lactococcus lactis subsp. lactis biovar diacetylactis,*
- as emulsifiers, between 0.2 and 1% by weight of a combination of (a) mono- and diglycerides of fatty acids and of (b) mono- and diacetyl tartaric acid esters of mono- and diglycerides of fatty acids, relatively to the total weight of the composition,
- thickeners, including between 0.1 and 0.5% of high-methylated pectin, between 0.1 and 2% of modified starch, between 0.1 and 0.5% of low-methylated pectin, between 0.1 and 0.5% of cellulose and cellulose gum by weight relatively to the total weight of the composition,
- citric acid and lactic acid, each up to 0.8% by weight relatively to the total weight of the composition.

2. Composition according to claim 1, **characterised in that** the composition preferably comprises between 0.2 and 0.4% by weight relatively to the total weight of the composition, of a combination of mono- and diglycerides of fatty acids and of mono- and diacetyl tartaric acid esters of mono- and diglycerides of fatty acids.

3. Composition according to any one of the previous claims, **characterised in that** the ratio between (a) the mono- and diglycerides of fatty acids and (b) the mono- and diacetyl tartaric acid esters of mono- and diglycerides is between 1 and 2.

4. Composition according to any one of the previous claims, **characterised in that** the composition comprises, as additional ferments, the mesophilic ferment *Leuconostoc mesenteroides subsp. Cremoris* or *Lactococcus lactis subsp. cremoris.*

5. Composition according to any one of the previous claims, **characterised in that** its pH is between 4.7 and 4.8.

6. Composition according to any one of the previous claims, **characterised in that** the composition comprises between 12 and 30% of fats, more preferably between 15 and 25% by weight relatively to the total weight of the composition.

7. Process of manufacture of an acidic, fermented and sterilised food cream composition according to any one of the previous claims, comprising in order the steps of:
- preparing a pasteurized skim milk,
- adding stabilisers and emulsifiers,
- preparing a pasteurised dairy cream,
- mixing the skim milk and the dairy cream,
- possibly adding at least an acid,
- homogenising and pasteurising the mix, then cooling,
- adding ferments and fermenting,
- possibly adding at least an acid,
- sterilising,
- homogenising,
- cooling,
- sterile conditioning.
